(19) Europäisches Patentamt
European Patent Office
Office européen des brevets

(11) Veröffentlichungsnummer: **0 001 420**
**B1**

# (12) EUROPÄISCHE PATENTSCHRIFT

(45) Veröffentlichungstag der Patentschrift: **24.06.81**

(51) Int. Cl.³: **C 08 F 6/00,** C 08 J 3/12, B 29 B 1/00, C 08 F 14/26

(21) Anmeldenummer: **78100956.8**

(22) Anmeldetag: **22.09.78**

(54) **Verfahren zur Nachbehandlung von thermisch vorbehandelten Tetrafluoräthylen-Polymerisaten unter Verbesserung des Fliessverhaltens und derart nachbehandelte Polymerisat-Pulver.**

(30) Priorität: **01.10.77 DE 2744244**

(43) Veröffentlichungstag der Anmeldung: **18.04.79 Patentblatt 79/8**

(45) Bekanntmachung des Hinweises auf die Patenterteilung: **24.06.81 Patentblatt 81/25**

(84) Benannte Vertragsstaaten: **BE DE FR GB NL**

(56) Entgegenhaltungen:
**GB-A-1 137 349**
**US-A-3 152 201**
**US-A-3 528 955**

(73) Patentinhaber: **HOECHST AKTIENGESELLSCHAFT, Postfach 80 03 20, D-6230 Frankfurt/Main 80 (DE)**

(72) Erfinder: **Sulzbach, Reinhard Albert, Dr., Kammererstrasse 10, D-8263 Burghausen/Salzach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Verfahren zur Nachbehandlung von thermisch vorbehandelten Tetrafluoräthylen-Polymerisaten unter Verbesserung des Fliessverhaltens und derart nachbehandelte Polymerisat-Pulver

Die Erfindung betrifft ein Verfahren zur Nachbehandlung von durch Erhitzen auf 325° bis 500°C bis zu einem Sintergrad von praktisch 100%, bestimmt nach der Differentialthermoanalyse, thermisch vorbehandelten, aus der Schmelze nicht verarbeitbaren Tetrafluoräthylen-Polymerisaten, welche gegebenenfalls vor der Nachbehandlung mechanisch zerkleinert worden sind, unter Erhöhung des Schüttgewichts und Verbesserung der Rieselfähigkeit, sowie derart nachbehandelte Tetrafluoräthylen-Polymerisat-Pulver.

Polytetrafluoräthylen kann aufgrund seiner hohen Schmelzviskosität nicht nach den für Thermoplaste gebräuchlichen Verfahren zu Formkörpern verarbeitet werden. Daher wurden für Polytetrafluoräthylen spezielle Verarbeitungsverfahren entwickelt.

Die Ram-Extrusion ist ein kontinuierliches Pulver-Sinter-Verfahren zur Herstellung endloser Rohre und Stäbe. Dabei wird ein Polytetrafluoräthylen-Pulver durch einen Dosierautomaten in sich wiederholenden Zyklen in ein auf Sintertemperatur aufgeheiztes Rohr eingebracht, mit einem Kolben verdichtet und jeweils ein entsprechendes Stück im Sinterrohr weiterbefördert. Unter diesen Bedingungen sintert das Pulver zu einem einheitlichen extrudierten Formkörper zusammen.

Von einem gut ram-extrudierbaren Polytetrafluoräthylenpulver wird ein möglichst gutes Fliessverhalten gefordert, das heisst ein hohes Schüttgewicht und eine gute Rieselfähigkeit. Schlecht rieselfähige Pulver führen zu Schwierigkeiten bei der automatischen Produktdosierung sowie zu einer ungleichmässigen Füllung und Verdichtung im Sinterrohr und damit zu einer unbefriedigenden Produktqualität des fertigen gesinterten Ram-Extrudats. Darüber hinaus ist ein möglichst hohes Schüttgewicht des Pulvers erstrebenswert, da der Ausstoss einer Maschine pro Arbeitszyklus mit steigendem Schüttgewicht des eingesetzten Materials zunimmt.

Zur Herstellung eines für die Ram-Extrusion geeigneten Pulvers wird vorzugsweise ein hochmolekulares Tetrafluoräthylen-Polymerisat als Ausgangsmaterial eingesetzt, das durch Suspensionspolymerisation in wässrigem Medium in Gegenwart eines radikalbildenden Initiators zugänglich ist. Derartige Suspensionspolymerisate des Tetrafluoräthylens sind jedoch als solche für die Ram-Extrusion nur bedingt geeignet. Sie zeigen einerseits bei hohen Extrusionsdrücken von beispielsweise 200 bis 800 bar, wie sie bei der Herstellung dünnwandiger Rohre auftreten, die Erscheinung der sogenannten «Tablettenbildung», das heisst die Trennflächen der einzelnen Dosierchargen werden optisch sichtbar, und es kann an diesen Stellen sogar zur Ausbildung von Rissen kommen. Andererseits besitzen diese Suspensionspolymerisate eine ausgesprochen unregelmässige Kornform und ein zu niedriges Schüttgewicht, was für die automatische Dosierung hinderlich ist.

Die aus der Suspensionspolymerisation primär erhaltenen Tetrafluoräthylen-Polymerisate sind daher zweckmässigerweise einer zusätzlichen Nachbehandlung zu unterziehen, um Pulver für die Ram-Extrusion zu erhalten, die allen Anforderungen in bezug auf Verarbeitbarkeit und Produktqualität gerecht werden.

Aus der US-PS 2 456 621 ist bekannt,dass Polytetrafluoräthylen-Pulver wesentlich verbesserte Ram-Extrudate liefern, wenn sie zuvor einer thermischen Behandlung bei Temperaturen von 300° bis 500°C unterzogen worden sind. Eine solche thermische Behandlung zur Erzeugung eines vorgesinterten Polytetrafluoräthylen-Pulvers und dessen anschliessende mechanische Zerkleinerung ist auch bekannt aus der US-PS 2 400 091. Es ist ferner bereits bekannt, Mischungen aus vorgesintertem und ungesintertem Polytetrafluoräthylen-Pulver (US-PS 2 485 691) oder auch partiell gesinterte Polytetrafluoräthylen-Pulver (US-PS 3 558 583) herzustellen und für die weitere Formgebung einzusetzen.

Alle diese Verfahren führen zwar zu einer gewissen Verbesserung der Qualität der aus diesen nachbehandelten Pulvern erhaltenen Ram-Extrudate, jedoch sind alle diese nachbehandelten Pulver wegen ihrer schlechten Rieselfähigkeit, ihres niedrigen Schüttgewichts und damit ihrer schlechten Dosierbarkeit nach wie vor unbefriedigend.

Es ist auch schon versucht worden (japanische Offenlegungsschrift 50/087 442), ein übliches Suspensionspolymerisat des Tetrafluoräthylens zunächst einer Feinmahlung und dann einem der üblichen Agglomerationsverfahren in flüssiger Phase zu unterwerfen und anschliessend zu sintern und dann zu zerkleinern. Dieses Verfahren ist wegen der Zahl der erforderlichen Verfahrensschritte aufwendig und umständlich.

In der US-PS 3 152 201 wird ein Verfahren zur Herstellung eines Polytetrafluoräthylen-Pulvers mit verbesserten Fliesseigenschaften und erhöhtem Schüttgewicht beschrieben, nach dem ein Polytetrafluoräthylen-Pulver bei einer Temperatur von 327 bis 400°C gesintert wird, das resultierende, zu einem Kuchen zusammengebackene Material dann auf Raumtemperatur abgekühlt, in kleinere Stücke zerteilt und in einem Mischer bei einer Temperatur von unterhalb +19°C einer weiteren mechanischen Behandlung unterworfen wird, bis eine Teilchengrösse von 200 bis 550 μ erhalten ist. Bei diesem Verfahren ist es von kritischer Bedeutung, dass das Pulver während dieser mechanischen Nachbehandlung unbedingt bei einer Temperatur von unterhalb +19°C gehalten wird. In der Praxis bedingt dies ein Herunterkühlen auf erheblich niedrigere Temperaturen, da bei der mechanischen Behandlung ohnehin eine Erwärmung auftritt. Steigt die Temperatur auf Werte von oberhalb +19°C an, so verschlechtern sich die Eigenschaften des erhaltenen Pulvers. Es besteht hierbei zusätzlich die Gefahr, dass beim Herunterkühlen durch Kondensation Feuchtigkeit in dieses Pulver gelangt. Bei Nacharbeitungen wurde ausserdem festgestellt, dass sich der dort in einem handelsüblichen Mischer erhaltene Effekt der Erhöhung des Schüttgewichts und der Verbesserung der Rieselfähigkeit in anderen mechanischen Behandlungs- und Zerkleinerungseinrichtungen, insbesondere in kontinuierlich arbeitenden mechanischen Mahlvorrichtungen, wie beispielsweise einer Hammermühle, nicht erreichen lässt. In einem Mischer bedarf es, wie ebenfalls durch Nacharbeitung festgestellt wurde, für eine hinreichende Erhöhung des Schüttgewichts und Verbesserung der Rieselfähigkeit ausser den genannten Kühlbedingungen einer Behandlungsdauer von zumindest einigen Minuten. Für eine kontinuierliche Verfahrensweise ist ein solcher Behandlungsschritt wenig geeignet. Es besteht daher nach wie vor das Bedürfnis nach einem vereinfachten Verfahren, mit dem thermisch vorbehandelte Tetrafluoräthylen-Polymerisate mit guten Fliesseigenschaften, das heisst mit hohem Schüttgewicht und mit ausgezeichnetem Rieselverhalten, möglichst in kontinuierlicher Arbeitsweise erhalten werden können.

Diesem Bedürfnis wird gemäss der vorliegenden Erfindung entsprochen durch ein Verfahren, das dadurch gekennzeichnet ist, dass das vorgesinterte Tetrafluoräthylen-Polymerisat bei Temperaturen unterhalb von +80 °C einer Prallbeanspruchung ausgesetzt wird, die durch praktisch ausschliesslichen gegenseitigen Zusammenprall der Teilchen unter dem beschleunigenden Einfluss eines oder mehrerer Gasstrahlen hoher Geschwindigkeit bewirkt wird.

Zur Durchführung des erfindungsgemässen Verfahrens eignen sich prinzipiell Strahlmühlen der unterschiedlichsten Bauart. In diesen Vorrichtungen werden die thermisch vorbehandelten Tetrafluoräthylen-Polymerisatteilchen in einem oder mehreren expandierenden Gasstrahlen mit hoher Geschwindigkeit von etwa 50 bis zu etwa 1000 m/sec verteilt und durch die hohe Geschwindigkeit und Turbulenz des Gasstroms gegeneinander geschleudert.

Besonders geeignete Vorrichtungen zur Durchführung des erfindungsgemässen Verfahrens sind Strahlmühlen mit kreisförmigem Mahlraum, in den die Treibmittel-Ströme (Gasstrahlen) aus mehreren am Umfang angebrachten Düsen in tangentialer Richtung eingeblasen werden, so dass sie sich im Innern des Mahlraumes zu einer kreisförmigen Strömung vereinigen, wodurch ein Verschleiss der Wandung vermieden wird. Solche Mühlen werden in verschiedenen Ausführungsformen in der US-PS 2032827 beschrieben. Handelsübliche Mühlen dieser Bauart sind beispielsweise der «Micronizer®» und die von der Fa. Alpine hergestellten «Aeroplex®»-Spiralstrahlmühlen.

Ferner sind geeignet Mühlen von der Bauart des «Reductionizer» (Industrial and Engineering Chemistry, 38 No. 7 [1946] Seite 676) oder «Jet-O-Mizer» (US-PS 2590220). Der Mahlraum dieser letztgenannten Strahlmühlen besteht aus einem aufrechtstehenden, dicken, ovalen Rohr. In den unteren Krümmer wird das Mahlgut mit einem Gasstrahl tangential eingeblasen. Zusätzlich werden mehrere Gasstrahlen mit hoher Geschwindigkeit tangential eingeblasen, die eine starke Umlaufströmung im Rohr erzeugen. Das Feingut wird an der Innenseite des Rohres oben abgesaugt.

Ebenso geeignet sind andere Strahlmühlen, wie beispielsweise eine Fliessbettstrahlmühle, beschrieben in der DE-OS 2040519, eine «Eagle-Mill», bei der der Zusammenprall der Pulverteilchen dadurch bewirkt wird, dass man das Pulver mit einem Gas hoher Geschwindigkeit durch ein langes Rohr befördert (vgl. Industrial and Engineering Chemistry 38, No. 7, Seite 677) oder Gegenstrahlmühlen verschiedenster Bauart, bei denen zwei Gasstrahlen unter einem Stosswinkel von 180° gegeneinander gerichtet sind (Verfahrenstechnik 4, 1970, Nr. 8, Seite 346).

Als gasförmige Medien zur Erzeugung solcher Gasstrahlen hoher Geschwindigkeit eignen sich alle Gase, die sich gegenüber den zu behandelnden Tetrafluoräthylen-Polymerisaten inert verhalten. Vorzugsweise wird komprimierte Luft verwendet, es kann aber auch beispielsweise mit Stickstoff gearbeitet werden. Der zur Erzeugung solcher Gasstrahlen hoher Geschwindigkeit erforderliche Eingangsdruck des Gases ist nicht kritisch und kann zwischen 2 und 16 bar Überdruck variiert werden. Vorzugsweise wird ein Eingangsdruck von 3 bis 8 bar Überdruck angewendet.

Die Temperatur, bei der das erfindungsgemässe Verfahren durchgeführt wird, kann in einem weiten Bereich von –50° bis +80 °C gewählt werden. Im Gegensatz zu dem Verfahren nach US-PS 3152201 existieren hier keinerlei kritische Temperaturbedingungen innerhalb dieses Bereichs. Zweckmässigerweise wird bei Raumtemperatur gearbeitet, so dass jeglicher Energie- oder apparativer Aufwand für Kühlen oder Erwärmen entfallen kann.

Es wurde festgestellt, dass sich Tetrafluoräthylen-Polymerisate, die durch Erhitzen über den Kristallitschmelzbereich des Polytetrafluoräthylens von 325° bis 340 °C thermisch vorbehandelt wurden und einen Sintergrad von praktisch 100% nach der Differential-Thermoanalyse aufweisen, bei der Nachbehandlung nach dem erfindungsgemässen Verfahren völlig anders verhalten als thermisch nicht vorbehandelte Polytetrafluoräthylen-Pulver. Aus der US-PS 3528955 und US-PS 3640984 sind Verfahren bekannt, thermisch nicht vorbehandelte, granulare Polytetrafluoräthylen-Pulver einer Behandlung in Gasstrahlmühlen zu unterwerfen. Dabei erfolgt eine starke Zerkleinerung des Ausgangsmaterials zu ultrafeinen Pulvern mit mittleren Teilchendurchmessern von unter 50 µm. Derart feine Pulver, deren Einsatzzweck die Press-Sinter-Verarbeitung und die Schälfolienherstellung sind, besitzen ein ausgesprochen niedriges Schüttgewicht von etwa 300 bis 400 g/l, sie sind nicht rieselfähig und

für die Ram-Extrusion völlig ungeeignet. Bei thermisch vorbehandelten Pulvern tritt eine Mahlung zu einem derartig feinen Pulver nicht ein, der mittlere Teilchendurchmesser nimmt allenfalls geringfügig ab, aber es wird überraschenderweise eine deutliche Erhöhung des Schüttgewichts um einen Betrag von mehr als 150 g/l, in den meisten Fällen mehr als 200 g/l erzielt. Gleichzeitig wird die Rieselfähigkeit des Pulvers merklich verbessert.

Der Nachbehandlung nach dem erfindungsgemässen Verfahren sind prinzipiell alle Tetrafluoräthylen-Polymerisate zugänglich, die eine Schmelzviskosität von mindestens $1 \cdot 10^8$ Pas bei 380 °C besitzen und daher nicht aus der Schmelze verarbeitet werden können, das heisst üblichen thermoplastischen Formgebungsverfahren nicht zugänglich sind.

Bevorzugt sind dies die Suspensionspolymerisate des Tetrafluoräthylens, wie sie nach üblichen Verfahren der Suspensionspolymerisation in Gegenwart von radikalbildenden Initiatoren, gegebenenfalls auch in Gegenwart von Fällungsmitteln oder sehr kleinen Mengen von Emulgatoren in Form eines granularen Pulvers mit breiter Korngrössenverteilung von etwa 300 bis 3000 µm und mit ausgesprochen unregelmässiger Konstruktur anfallen. Suspensionspolymerisate dieser Art sind beispielsweise bekannt aus den US-Patentschriften 2 393 967, 2 394 243, 2 471 959, 2 510 783, 2 515 628, 2 520 338, 2 534 058, 2 565 573, 2 599 299, 3 632 847 und der DE-OS 25 23 570.

Derartige Rohpolymerisate können nach einer Wasserwäsche und der an sich bekannten thermischen Behandlung unmittelbar dem erfindungsgemässen Verfahren der Nachbehandlung unterworfen werden.

Besonders bevorzugte Ausgangsmaterialien für das erfindungsgemässe Verfahren stellen solche Suspensionspolymerisate des Tetrafluoräthylens dar, die in Gegenwart geringer Mengen (etwa 0,0004 bis 1,5 Mol-%, bezogen auf monomeres Tetrafluoräthylen) eines perfluorierten Comonomeren hergestellt worden sind. Derartige modifizierte Tetrafluoräthylen-Suspensionspolymerisate sind beispielsweise bekannt aus der GB-PS 1 116 210, aus der US-PS 3 331 822, aus der US-PS 3 655 611, aus DE-OS 24 16 452 und aus der D-OS 25 23 569. Sie wurden ferner vorgeschlagen in der deutschen Patentanmeldung P 26 17 829.0.

Als solche modifizierende Monomere für die Suspensionspolymerisation von Tetrafluoräthylen kommen insbesondere in Frage:

a) Perfluoralkylvinyläther der Formel

$$CF_2{=}CF{-}O{-}R_f,$$

worin $R_f$ ein Perfluoralkylrest mit 1 bis 10, vorzugsweise 1 bis 4 C-Atomen, insbesondere ein Perfluor-n-propylrest ist,

b) perfluorierte Äther der Formel

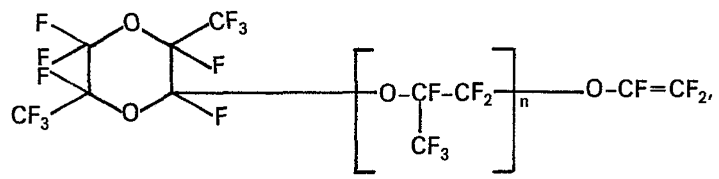

worin n = 0 bis 4, vorzugsweise 0 oder 1 ist,

c) perfluorierte Äther der Formel

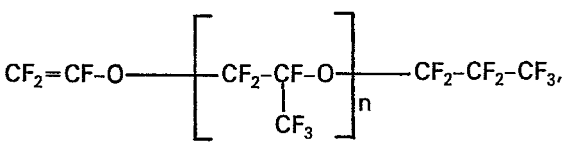

worin n = 1 bis 4, vorzugsweise 1 oder 2 ist,

d) Perfluor-2-methylen-4-methyl-1,3-dioxolan und

e) perfluorierte Olefine der Formel

$$CF_2{=}CF{-}R_f,$$

worin $R_f$ ein Perfluoralkylrest mit 1 bis 4 C-Atomen ist; insbesondere ist dies Hexafluorpropylen.

Besonders bevorzugt sind modifizierende Monomere der Gruppen a), b) und c). Derartige modifizierte Tetrafluoräthylen-Suspensionspolymerisate, die das modifizierende Monomere in einem Anteil von 0,0002 bis 0,5 Mol-% ihrer Einheiten, bezogen auf Tetrafluoräthylen-Einheiten, enthalten und wie angegeben, thermisch vorbehandelt worden sind, ergeben bei Nachbehandlung nach dem erfindungsgemässen Verfahren Ram-Extrusionspulver mit besonders vorzüglichen Eigenschaften.

Gegenstand der Erfindung ist somit auch ein thermisch vorbehandeltes, aus der Schmelze nicht verarbeitbares, mit einem perfluorierten Monomeren modifiziertes Tetrafluoräthylen-Polymerisatpulver, enthaltend Tetrafluoräthylen-Einheiten und 0,0002 bis 0,5 Mol-% Einheiten des perfluorierten Monomeren, bezogen auf Tetrafluoräthylen-Einheiten, mit einem Sintergrad von praktisch 100%, bestimmt nach der Differentialthermoanalyse, einem mittleren Teilchendurchmesser $d_{50}$ von 300 bis 700 µm, einem Feinanteil von Teilchen unter 150 µm von nicht mehr als 15 Gew.-%, bestimmt nach Trockensiebanalyse, einem Schüttgewicht von über 770 g/l und einer Rieselfähigkeit von höchstens 3 sec/50 g.

Vorzugsweise liegt bei solchen Pulvern das Schüttgewicht über 900 g/l. Die Rieselfähigkeit beträgt vorzugsweise höchstens 2,6 sec/50 g.

Als Ausgangsmaterialien für die Nachbehandlung nach dem erfindungsgemässen Verfahren

können aber auch thermisch vorbehandelte Tetrafluoräthylen-Polymerisat-Pulver eingesetzt werden, die aus den primären Suspensionspolymerisaten durch weitere, sich an die Polymerisation und die Wäsche anschliessende Behandlungsschritte erhalten worden sind. Solche Weiterbehandlungsschritte, die in erster Linie der Verbesserung der Pulvereigenschaften der Rohpolymerisate dienen, sind beispielsweise eine Nassmahlung, wie in der US-PS 3 115 486 beschrieben ist, oder die Behandlung von Suspensionspolymerisaten unter Einwirkung mechanischer Kräfte in flüssigen Medien (Wasser, organische Flüssigkeiten oder wässrig-organische Medien). Solche Agglomerationsverfahren in einem flüssigen Medium sind bekannt aus der DE-PS 1 679 830, aus der DE-PS 1 745 907, aus DE-PS 1 745 937, aus DE-PS 1 454 857, aus der DE-AS 1 604 349 und aus der DE-OS 1 544 624.

Es können auch thermisch vorbehandelte Tetrafluoräthylen-Polymerisat-Pulver als Ausgangsmaterialien für das erfindungsgemässe Verfahren eingesetzt werden, die einen anorganischen Füllstoff, wie beispielsweise Metallpulver, anorganische Oxide oder Glasfasern enthalten und die durch eines der vorgenannten Nass-Agglomerationsverfahren in Gegenwart eines Füllstoffs und anschliessende thermische Vorbehandlung erhältlich sind.

Die Korngrösse der thermisch vorbehandelten Pulver ist für die Nachbehandlung nach dem erfindungsgemässen Verfahren weitgehend unkritisch. Es werden Pulver mit einem mittleren Teilchendurchmesser ($d_{50}$) von etwa 200 bis 1500 µm, vorzugsweise 100 bis 1000 µm, insbesondere von 400 bis 800 µm eingesetzt. Die an sich bekannte thermische Vorbehandlung des Tetrafluoräthylen-Polymerisat-Pulvers kann in einem Temperaturbereich zwischen 325° und 500 °C in einer Wirbelschicht oder in einer ruhenden Schicht erfolgen. Bei einer ruhenden Schicht arbeitet man vorzugsweise in einem Temperaturbereich zwischen 340 und 420 °C. Die Zeitdauer dieser thermischen Vorbehandlung hängt in erster Linie von der gewählten Temperatur, bei ruhender Schicht aber auch von der Schichtdicke der Pulverschüttung ab. Die Sinterzeit muss so ausreichend lang bemessen sein, dass jedes Einzelkorn des Pulvers mindestens auf den Kristallit-Schmelzbereich des Polytetrafluoräthylens von 325° bis 340 °C aufgeheizt wird.

Führt man die thermische Behandlung beispielsweise bei 350° bis 380 °C mit einer ruhenden Schicht in einer Schütthöhe von 1 bis 3 cm Polytetrafluoräthylen-Pulver durch, so erhält man mit Sinterzeiten von 0,5 bis 4 Stunden ein vollständig vorgesintertes Produkt.

Der Sintergrad des nach dem erfindungsgemässen Verfahren eingesetzten Produktes soll in jedem Fall praktisch 100% betragen, dies lässt sich mit Hilfe der Differentialthermoanalyse kontrollieren.

Durch die Nachbehandlung nach dem erfindungsgemässen Verfahren ist es möglich, thermisch vorbehandelte Pulver mit guter Rieselfähigkeit und hohem Schüttgewicht in konstruktiv einfachen, handelsüblichen Strahlmühlen herzustellen. Eine Kühlung des Produkts ist dabei nicht erforderlich, so dass jeder apparative Aufwand dafür entfällt. Ein weiterer noch wesentlicherer Vorteil des erfindungsgemässen Verfahrens ist die äusserst kurze Behandlungsdauer von wenigen Sekunden, die eine technisch einfache, vollkontinuierliche Arbeitsweise ermöglicht. Zu einem solchen kontinuierlichen Verfahren kann man mit der im Beispiel der US-PS 3 152 201 beschriebenen Behandlung in einem diskontinuierlichen Mischer nicht gelangen. Es wurde auch festgestellt, dass eine kontinuierlich arbeitende mechanische Zerkleinerungseinrichtung, wie sie eine Hammermühle darstellt, keine befriedigende Verbesserung des Schüttgewichts und der Rieselfähigkeit zu erzielen vermag.

In Tabelle I wird einerseits gezeigt, dass bei Einsatz eines diskontinuierlich arbeitenden Mischers, der in seinem Arbeitsprinzip dem «Waring Blendor» des Beispiels der US-PS 3 152 201 entspricht, das Schüttgewicht und die Rieselfähigkeit des resultierenden Pulvers erst mit steigender Behandlungsdauer des Produktes zunehmen. Eine Behandlungsdauer von mehreren Minuten ist erforderlich, um ein Schüttgewicht von über 700 g/l zu erreichen (Vergleichsbeispiele A, B, C).

Andererseits geht aus Tabelle 1 hervor, dass bei Einsatz einer kontinuierlich arbeitenden mechanischen Hammermühle bei kurzer Behandlungsdauer äusserst unbefriedigende Pulvereigenschaften erzielt werden (Vergleichsbeispiel D). Die Vorteile des erfindungsgemässen Verfahrens sind durch Gegenüberstellung der Ergebnisse des Vergleichsbeispiels D (kontinuierliche, rein mechanische Arbeitsweise) und des erfindungsgemässen Beispiels 1 (kontinuierliche Arbeitsweise in einer Strahlmühle) ersichtlich.

In Tabelle 4 wird demonstriert, dass sich aus thermisch vorbehandelten Polytetrafluoräthylenpulvern der verschiedensten Art (Ausgangsprodukte E–M) durch das erfindungsgemässe Verfahren Pulver mit wesentlich erhöhtem Schüttgewicht und verbesserter Rieselfähigkeit herstellen lassen (Beispiele 2 bis 10).

Die Rieselfähigkeit stellt ein praxisnahes Mass für die Dosierbarkeit eines Pulvers an einer Verarbeitungsmaschine dar. Zu ihrer Bestimmung werden unter genau festgelegten Bedingungen 50 g des zu prüfenden Pulvers in einem Trichter eine Minute lang einer Vibration ausgesetzt. Danach wird die Zeit gemessen, in der das Produkt unter Vibration aus dem Trichter ausläuft. Wie aus Tabelle 4 hervorgeht, treten bei dieser, für die Praxis wichtigen Pulvereigenschaft, bei den erfindungsgemäss hergestellten Produkten Verbesserungen von 10 bis 50% gegenüber den entsprechenden unbehandelten Pulvern ein.

In den Beispielen 2 bis 4 werden thermisch vorbehandelte Rohpolymerisate eingesetzt, die man unter verschiedenen Polymerisationsbedingungen (vgl. Tabelle 2) nach dem Verfahren der Suspensionspolymerisation erhält. Bei den Ausgangsprodukten der Beispiele 7 und 8 handelt es sich um am Markt befindliche Polytetrafluoräthylen-Pulver (Produkt J = Hostaflon® TF 1100 der Hoechst AG, Produkt K = Fluon® G 201 der Firma Imperial Chemical Industries Ltd.), die speziell zur Verarbeitung nach dem Verfahren der Ram-Extrusion angeboten werden. Diese handelsüblichen Produkte sind thermisch vorbehandelte Polytetrafluoräthylen-Pulver, die auf Basis von Suspensionspolymerisaten hergestellt werden.

Die Beispiele 2 bis 4 zeigen, dass es einerseits möglich ist, direkt aus thermisch vorbehandelten Suspensions-Rohpolymerisaten, die ein niedriges Schüttgewicht und eine unbefriedigende Rieselfähigkeit zeigen, Pulver für die Ram-Extrusion herzustellen, die in bezug auf ihre Pulvereigenschaften dem Stand der Technik, repräsentiert durch die Produkte J und K, überlegen sind. Werden andererseits die Produkte H bis K als Ausgangsmaterialien für das erfindungsgemässe Verfahren eingesetzt, so erhält man Pulver, die sich insbesondere durch ihre unübertroffen hohen Schüttgewichte von über 800 g/l und ihre gute Rieselfähigkeit auszeichnen (Beispiele 5 bis 8).

Die erfindungsgemässe Verbesserung der Pulvereigenschaften thermisch behandelter Polytetrafluoräthylen-Pulver durch Zusammenprall der einzelnen Teilchen unter dem beschleunigenden Einfluss eines Gasstrahls ist jedoch nicht nur an den Einsatz von Suspensionspolymerisaten als Ausgangsmaterial gebunden. Die gleichen Effekte können auch, wie Beispiel 9 zeigt, mit gesinterten Pulvern erzielt werden, die man durch Emulsionspolymerisation erhält. Solche Emulsionspolymerisate ergeben jedoch, im Vergleich zu Suspensionspolymerisaten, Ram-Extrudate mit niedrigeren mechanischen Eigenschaften.

Beispiel 10 zeigt, dass man auch bei füllstoffhaltigen Polytetrafluoräthylen-Pulvern eine Verbesserung der Eigenschaften durch das erfindungsgemässe Verfahren erreichen kann.

Tabelle 1:

| | Vergleichsbeispiel*) A | Vergleichsbeispiel*) B | Vergleichsbeispiel*) C | Vergleichsbeispiel D | Erfindungsgemässes Beispiel 1 |
|---|---|---|---|---|---|
| Verfahrenstechnisches Prinzip | Mischer (diskontinuierlich) | Mischer (diskontinuierlich) | Mischer (diskontinuierlich) | Hammermühle**) (kontinuierlich) | Spiralstrahlmühle (kontinuierlich) |
| Temperatur des Produktes | <19°C | <19°C | <19°C | <19°C | 22–23°C |
| Behandlungsdauer des Produktes (Minuten) | 3 | 5 | 10 | <0,5 | <0,5 |
| Schüttgewicht (g/l) | 655 | 665 | 710 | 540 | 775 |
| Mittlere Teilchengrösse $d_{50}$ (μm) | 500 | 430 | 390 | 540 | 490 |
| Rieselfähigkeit (sec./50 g) | 3,1 | 2,9 | 2,8 | 3,8 | 2,6 |

*) analog US-PS 3 152 201
**) Das Schüttgewicht und die Rieselfähigkeit des erhaltenen Produktes zeigten bei nochmaliger Behandlung mit der Hammermühle unter gleichen Bedingungen keine Veränderung.

Die Produkte wurden nach folgenden Untersuchungsmethoden geprüft:

Schüttgewicht nach DIN 53 468;

Trockensiebanalyse nach DIN 53 477 mit einem Siebgerät Fabrikat Jel 200 - 65 (Fa. J. Engelsmann, Ludwigshafen), bei einer Rüttelzeit von 15 Minuten.

Mittlerer Teilchendurchmesser ($d_{50}$) ist definiert als die rechnerisch ermittelte Siebmaschenweite, bei welcher ein Siebrückstand von 50% verbleibt.

Rieselfähigkeit

50 g des zu prüfenden Pulvers werden in einen Trichter aus Polyäthyln (Höhe 75 mm, oberer Durchmesser 400 mm, Durchmesser des Ablaufs 12 m) eingefüllt. Der Trichter ist mit einem Vibrator (Vibro-Mixer E 1 der AG für Chemie-Apparatebau, Zürich) fest verbunden. Der Abstand vom Motorengehäuse bis zur Trichtermitte beträgt 125 mm. Die Schwingungsbreite des Vibrators, gemessen in der Mitte des Trichters, ist auf 2 mm eingestellt. Das Pulver wird bei eingeschaltetem Vibrator und verschlossenem Auslauf des Trichters 1 Minute lang gerüttelt. Danach wird der Trichterauslauf freigegeben und die Auslaufzeit des Produktes unter Vibration gemessen. Die Zeitmessung kann manuell mit einer Stoppuhr oder aber voll automatisch mit einer Lichtschranke erfolgen. Die Reproduzierbarkeit der Messung beträgt ca. ±0,1 sec.

Sintergrad nach Differentialthermoanalyse (DTA)

50 mg des Polytetrafluoräthylen-Pulvers werden mit einer Geschwindigkeit von 5°C pro Minute in Luft erhitzt. Man erhält ein Thermogramm, das die charakteristischen Maxima bei etwa 327°C (für 100% gesintertes Produkt) und bei etwa 340°C (für ungesintertes Produkt) zeigt. Aus den maximalen Höhen der Schmelzpeaks bei 327°C ($d_1$) und 340°C ($d_2$) kann nach folgender Gleichung der Sintergrad nach DTA errechnet werden:

$$\text{Sintergrad DTA} = \frac{2 \cdot d_1}{2 \cdot d_1 + d_2} \cdot 100$$

Für $d_2 = 0$ ergibt sich somit ein Sintergrad von 100%.

Beispiele

a) Herstellung der Ausgangsprodukte

Polymerisiert wird in einem Autoklaven mit einem Fassungsvermögen von 180 l, ausgerüstet mit Rührer und Stromstörer. Die Innenfläche des Autoklaven ist emailliert.

Zunächst werden 90 l entionisiertes Wasser und die in Tabelle 2 angegebenen Zusatzstoffe vorgelegt. Der Rührer wird auf eine Geschwindigkeit von 100 U/min eingestellt. Nach mehrmaligem Spülen des Autoklaven mit Stickstoff und zweimaliger Spülung mit Tetrafluoräthylen (3 bar) wird Tetrafluoräthylen bis zum gewünschten Polymerisationsdruck aufgepresst. Nach Erhöhung der Rührerdrehzahl auf 180 U/min werden die in Tabelle 2 angegebenn zusätzlichen Polymerisationshilfsmittel und gegebenenfalls das modifizierende Monomere zudosiert. Der Polymerisationsdruck wird nach erfolgtem Start der Reaktion mit einem Regelventil konstant gehalten. Die freiwerdende Wärme durch Kühlung des Autoklaven abgeführt. Polymerisiert wird bis zu einem Feststoffgehalt von 20 Gew.-%, bezogen auf die Flotte.

Nach erfolgter Polymerisation wird das Tetrafluoräthylen entspannt und der Autoklav dreimal unter Rühren mit Stickstoff gespült. Bei den Suspensionspolymerisaten (Vergleichsbeispiele bzw. Ausgangsprodukte A–J, Beispiele 1 bis 6) wird die Flotte abgelassen und das verbleibende Produkt dreimal je 5 Minuten mit 100 l Wasser bei einer Rührgeschwindigkeit von 110 U/min gewaschen. In den Vergleichsbeispielen bzw. Ausgangsprodukten A bis H sowie den Beispielen 1 bis 5 werden die gewaschenen Rohpolymerisate direkt 4 bis 5 Stunden auf Blechen in einer Schütthöhe von 3 cm bei 200 °C getrocknet.

Bei Ausgangsprodukt I und Beispiel 6 wird das Rohpolymerisat in einem 100 l Glasgefäss in Gegenwart von Wasser mit einer Mahlvorrichtung auf eine mittlere Teilchengrösse von 300 bis 400 µm gemahlen. Die Polytetrafluoräthylenteilchen werden sodann unter Zusatz von Benzin (Kp 80 bis 100 °C) durch zweistündiges Rühren zu grösseren Partikeln mit einem mittleren Teilchendurchmesser von 400 bis 500 µm agglomeriert. Die von der flüssigen Phase auf einem Sieb befreiten Agglomerate werden schliesslich auf Blechen in 3 cm hoher Schüttung 5 h bei 280 °C unter Stickstoff getrocknet. Das Emulsionspolymerisat (Ausgangsprodukt L, Beispiel 9), das zunächst nach der Polymerisation als Dispersion mit 20 Gew.-% Feststoff anfällt, wird mit Wasser auf einen Feststoffgehalt von 10 Gew.-% verdünnt. Der Feststoff wird in einem Rührbehälter mit schnell laufendem Rührer koaguliert und nach dreimaliger Wäsche mit ca. 150 l entsalztem Wasser und Abtrennung des Wassers auf einem Sieb 20 Stunden bei 110 °C getrocknet.

Bei Ausgangsprodukt M und Beispiel 10 wird ein handelsübliches Polytetrafluoräthylen-Pulver mit 25 Gew.-% Glasfaserfüllstoff eingesetzt, das durch Agglomeration von feingemahlenem, granularem Polytetrafluoräthylen-Pulver und Glasfaser in flüssigem Medium erhalten worden ist.

Tabelle 2:
Daten zur Herstellung der Ausgangspolymerisate

| | Im Autoklaven mit Flotte vorgelegt | Nach Erreichen des Polym.-Druckes eindosiert | Polymerisations- Temp. (°C) | Druck (bar) |
|---|---|---|---|---|
| Vergleichsbeispiele A, B, C, D Ausgangsprodukt E, Beispiel 1, 2 | 11,1 g $(NH_4)_2CO_3$<br>0,37 g POS<br>0,25 g $CuSO_4 \cdot 5H_2O$ | 0,51 g PPVE<br>1,2 g APS<br>12,9 ml 18%igen Ammoniak<br>171 mg ADA gelöst in 2,1 ml 10%iger NaOH | 15 | 5,5 |
| Ausgangsprodukt F sowie Beispiel 3 | 90 g $(NH_4)_2CO_3$<br>0,36 g POS<br>0,25 g $CuSO_4 \cdot 5H_2O$ | 2,74 g APS<br>514 mg ADA gel. in 7,5 ml 10%iger NaOH | 15 | 5,5 |
| Ausgangsprodukte G u. J sowie Beispiele 4 und 6 | 1,1 g Ammoniumoxalat | 0,2 g Kaliumpermanganat | 15 | 7 |
| Ausgangprodukt H sowie Beispiel 5 | 63 g $(NH_4)_2CO_3$ | 4,7 g PPVE<br>4,5 g APS | 69 | 10 |
| Ausgangsprodukt L sowie Beispiel 9 | 18,9 kg 10%ige Polytetrafluoräthylen-Saatdisp.<br>79 g POS | 22,5 g PDVE<br>3,9 g Natriumpyrosulfit<br>6,3 g APS | 28 | 15 |

**Tabelle 2** (Fortsetzung)
Daten zur Herstellung der Ausgangspolymerisate

| | Im Autoklaven mit Flotte vorgelegt | Nach Erreichen des Polym.-Druckes eindosiert | Polymerisations- Temp. (°C) | Druck (bar) |
|---|---|---|---|---|
| | 108 ml 18%igen Ammoniak<br>84 mg $CuSO_4$<br>$\cdot 5H_2O$<br>1,8 g Diäthylenglykol | | | |

POS = Perfluoroctansäure
APS = Ammoniumperoxodisulfat
ADA = Azodicarbonsäurediamid
PPVE = Perfluor(propylvinyläther)
PDVE = Perfluor-(1,4-dioxanyl-2,5-trifluormethyl-3-vinyläther)
(PPVE und PDVE als modifizierende Monomere)

b) Thermische Behandlung der Ausgangsprodukte

Die nach Abschnitt a) hergestellten Polytetrafluoräthylen-Pulver werden auf Blechen in einer Schüttung von 3,5 cm in einem Hordenschrank auf 380°C aufgeheizt und 4 Stunden bei dieser Temperatur belassen. Die Aufheizzeit beträgt ca. 2 Stunden, die Abkühlzeit auf Raumtemperatur ca. 4 Stunden.

Die so behandelten Pulver sind nach der Differentialthermoanalyse zu 100% gesintert.

c) Weitere Behandlung der gesinterten Produkte

Vergleichsbeispiele A bis C

Das gesinterte, zu einem Kuchen zusammengebackene Polytetrafluoräthylen-Pulver wird in einem Polyäthylenbehälter von aussen mit Trokkeneis auf eine Produkttemperatur unter 10°C abgekühlt. Das gekühlte Produkt wird rasch in einem Mischer der Firma Rheinstahl Henschel, Typ RM 10 L, umgefüllt, der mit Kühlwasser auf ca. 15°C gehalten wird. Die Zerkleinerung des Sinterkuchens erfolgt bei verschiedenen Verweilzeiten bei einer Drehzahl von 3800 U/min. Nach erfolgter Zerkleinerung wird die Produkttemperatur gemessen. Sie liegt bei allen 3 Versuchen unter 19°C.

Die Pulvereigenschaften der resultierenden Produkte sind in Tabelle 1 angegeben.

Vergleichsbeispiel D

Das gesinterte, zu einem Kuchen zusammengebackene Polytetrafluoräthylen-Pulver wird, wie bei den Vergleichsbeispielen A bis C beschrieben, auf eine Temperatur unter 10°C abgekühlt und auf einer Hammermühle der Firma Alpine, Augsburg, Typ 40/32/HA mit einer Drehzahl von 2300 U/min zerkleinert. In die Mühle ist eine Siebplatte eingebaut, deren Öffnungen einen Durchmesser von 2 mm besitzen.

Die Raumtemperatur beträgt bei diesem Mahlversuch 17°C. Das resultierende Pulver, das mit einer Temperatur von 18°C die Mühle verlässt, besitzt die in Tabelle 1 angegebenen Eigenschaften.

Ausgangsprodukte E, F, G, H, I, L und M

Die nach Abschnitt a) hergestellten und nach Abschnitt b) gesinterten Produkte werden bei Raumtemperatur (21 bis 23°C) ohne vorherige Vorkühlung auf einer Hammermühle der Firma Alpine, Augsburg, Typ 40/32/HA bei einer Drehzahl von 2300 U/min zerkleinert. Die Öffnungen, der in die Mühle eingebauten Siebplatte besitzen einen Durchmesser von 2 mm.

Die Ausgangsprodukte J und K sind handelsübliche, thermisch vorbehandelte Polytetrafluoräthylen-Pulver. Diese werden auf Basis von Suspensionspolymerisaten hergestellt.

Die Pulvereigenschaften der Ausgangsprodukte E bis M sind in Tabelle 4 zusammengestellt.

Beispiel 1

Ein Suspensionspolymerisat des Tetrafluoräthylens, hergestellt in Gegenwart von 0,0011 Mol-% Perfluorpropylvinyläther, bezogen auf Tetrafluoräthylen, gemäss Vorschrift a), wird nach Vorschrift b) einer thermischen Behandlung unterzogen. Die nach der Sinterung schwach aneinanderklebenden Polytetrafluoräthylenteilchen werden zunächst rein mechanisch entweder diskontinuierlich durch Kurzzeitbehandlung in einem Mischer der Firma Rheinstahl, Henschel, bei einer Laufzeit von 15 Sekunden oder kontinuierlich in einer Hammermühle der Firma Alpine in die ursprünglich vor der Sinterung vorhandenen, einzelnen Partikel zerlegt.

Das auf diese Weise erhaltene, thermisch vorbehandelte Polytetrafluoräthylen-Pulver wird nun der erfindungsgemässen Nachbehandlung der Teilchen in einer Spiralstrahlmühle der Firma Alpine, Augsburg, Typ 315 AS, unterworfen.

Es wird mit einer Luftmenge von 430 $Nm^3/h$ und einem Luftvordruck von 7,5 bar gearbeitet. Der Polytetrafluoräthylen-Durchsatz beträgt 30 kg/h bei einer Produkttemperatur von 23°C. Das die Mühle verlassende Pulver wird über einen Zyklon abgeschieden. Die Pulvereigenschaften des Produktes sind in Tabelle 1 angegeben.

Das nach Beispiel 1 hergestellte Polytetrafluoräthylen-Pulver wird durch Ram-Extrusion zu einem Stab (Durchmesser 22 mm) und einem

Rohr (Durchmesser innen 32 mm, aussen 39 mm) verarbeitet. Es werden die in Tabelle 3 angegebenen mechanischen Werte erzielt.

Tabelle 3:
Mechanische Eigenschaften von Ram-Extrudaten aus nach Beispiel 1 hergestelltem Polytetrafluoräthylen-Pulver

| Eigenschaften | Stab (∅ 22 mm) | Rohr (∅i 32 mm, ∅a 39 mm) |
|---|---|---|
| Reissfestigkeit ($N/mm^2$) | | |
| längs | 24,1 | 22,8 |
| quer | – | 19,7 |
| Reissdehnung (%) | | |
| längs | 450 | 380 |
| quer | – | 330 |
| Dichte $g/cm^3$ | 2,153 | 2,153 |
| **Extrusionsbedingungen:** | | |
| Sinterzonenlänge (mm) | 1100 | 800 |
| Temperatureinstellung in Extrusionsrichtung (°C) | 370–380–390 | 370–380–390 |

Tabelle 3 (Fortsetzung)

| | | |
|---|---|---|
| Ausstoss m/h | 2 | 3 |

Das nach Beispiel 1 hergestellte, im Vergleich zu herkömmlichen Produkten ausgezeichnet dosierbare Pulver führt zu Ram-Extrudaten mit absolut glatter Oberfläche. Ferner sind weder am Stab noch am Rohr Anzeichen der sogenannten «Tablettenbildung» optisch feststellbar. Eine in Querrichtung aus dem Stab geschnittene dünne Scheibe zeigt, dass die einzelnen Polytetrafluoräthylen-Teilchen konturenlos zu einem homogenen, leicht transparenten Produkt verschmolzen sind.

Beispiele 2 bis 10

In den Beispielen 2 bis 10 werden die als Ausgangsprodukte E bis M erhaltenen thermisch vorbehandelten Pulver der Nachbehandlung nach dem erfindungsgemässen Verfahren unterworfen, wobei die Strahlmühle der Firma Alpine unter den in Beispiel 1 angegebenen Bedingungen betrieben wird.

Die Pulvereigenschaften der nach den Beispielen 2 bis 10 hergestellten Produkte sind in Tabelle 4 mit den Eigenschaften des jeweils eingesetzten Ausgangsmaterials E bis M angegeben.

Tabelle 4

| Art des Pulvers | Schüttgew. (g/l) | Rieselfähigkeit (sec/50 g) | mittl. Teilchendurchmesser ($d_{50}$) (µm) | Anteil <150 µm nach Siebanalyse (%) |
|---|---|---|---|---|
| Ausgangsprodukt E | 570 | 3,6 | 610 | 0,2 |
| Beispiel 2 | 770 | 2,5 | 440 | 3,8 |
| Ausgangsprodukt F | 475 | 4,7 | 825 | – |
| Beispiel 3 | 740 | 2,8 | 540 | 1,2 |
| Ausgangsprodukt G | 515 | 5,8 | 600 | 0,1 |
| Beispiel 4 | 760 | 3,0 | 420 | 3,8 |
| Ausgangsprodukt H | 760 | 2,4 | 400 | 2,6 |
| Beispiel 5 | 1050 | 1,8 | 380 | 3,0 |
| Ausgangsprodukt I | 720 | 3,8 | 420 | 3,0 |
| Beispiel 6 | 955 | 2,2 | 340 | 5,6 |
| Ausgangsprodukt J | 703 | 4,0 | 417 | 2,3 |
| Beispiel 7 | 940 | 2,2 | 340 | 5,6 |
| Ausgangsprodukt K | 710 | 3,4 | 460 | 7,4 |
| Beispiel 8 | 870 | 3,0 | 360 | 12,2 |
| Ausgangsprodukt L | 740 | 3,1 | 640 | – |
| Beispiel 9 | 980 | 2,0 | 420 | 0,3 |
| Ausgangsprodukt M | 1000 | 2,1 | 530 | 1,0 |
| Beispiel 10 | 1160 | 1,4 | 460 | 1,8 |

**Patentansprüche**

1. Verfahren zur Nachbehandlung von durch Erhitzen auf 325° bis 500°C bis zu einem Sintergrad von praktisch 100%, bestimmt nach der Differentialthermoanalyse, thermisch vorbehandelten, aus der Schmelze nicht verarbeitbaren Tetrafluoräthylen-Polymerisaten, welche gegebenenfalls vor der Nachbehandlung mechanisch zerkleinert worden sind, unter Erhöhung des Schüttgewichts und Verbesserung der Rieselfähigkeit, dadurch gekennzeichnet, dass das thermisch vorbehandelte Tetrafluoräthylen-Polymerisat bei Temperaturen unter +80 °C einer Prallbeanspruchung ausgesetzt wird, die durch praktisch ausschliesslichen gegenseitigen Zusammenprall der Teilchen unter dem beschleunigenden Einfluss eines oder mehrerer Gasstrahlen hoher Geschwindigkeit bewirkt wird.

2. Verfahren nach Anspruch 1, dadurch gekennzeichnet, dass als Ausgangsmaterial thermisch vorbehandeltes Polytetrafluorethylen, erhalten nach dem Verfahren der Suspensionspolymerisation, eingesetzt wird.

3. Verfahren nach Anspruch 1, dadurch gekennzeichnet, dass als Ausgangsmaterial ein thermisch vorbehandeltes, aus der Schmelze nicht verarbeitbares Suspensionspolymerisat des Tetrafluorethylens eingesetzt wird, das in Gegenwart von 0,0004 bis 1,5 Mol-%, bezogen auf Tetrafluorethylen, eines modifizierenden perfluorierten Monomeren erhalten worden ist.

4. Verfahren nach Anspruch 1 bis 3, dadurch gekennzeichnet, dass als Ausgangsmaterial ein thermisch vorbehandeltes, aus der Schmelze nicht verarbeitbares Tetrafluoräthylen-Polymerisat eingesetzt wird, das einen anorganischen Füllstoff enthält.

5. Thermisch vorbehandeltes, aus der Schmelze nicht verarbeitbares, mit einem perfluorierten Monomeren modifiziertes Tetrafluoräthylen-Polymerisatpulver, enthaltend Tetrafluoräthylen-Einheiten und 0,0002 bis 0,5 Mol-% Einheiten des perfluorierten Monomeren, bezogen auf Tetrafluoräthylen-Einheiten, mit einem Sintergrad von praktisch 100%, bestimmt nach der Differentialthermoanalyse, einem mittleren Teilchendurchmesser $d_{50}$ von 300 bis 700 µm einem Feinanteil von Teilchen unter 150 µm von nicht mehr als 15 Gew.-%, bestimmt nach Trockensiebanalyse, einem Schüttgewicht von über 770 g/l und einer Rieselfähigkeit von höchstens 3 sec/50 g.

## Claims

1. Process for aftertreating non-melt-processable tetrafluoroethylene polymers, which had been thermally pretreated by heating to 325 to 500 °C to a degree of sintering of substantially 10% as determined by differential thermoanalysis, and optionally been comminuted mechanically, for increasing bulk density and improving flow index, characterized by subjecting the thermally pretreated tetrafluoroehtylene powder to an impact stress at a temperature below +80 °C effected substantially solely by interparticulate collision of the particles under the accelerating influence of at least one gas jet of high velocity.

2. The process of claim 1, characterized in that the starting material is a thermally pretreated tetrafluoroethylene polymer obtained by suspension polymerization.

3. The process of claim 1, characterized in that the starting material is a thermally pretreated tetrafluoroethylene polymer obtained by suspension polymerization of tetrafluoroethylene in the presence of 0.0004 to 1.5 mole %, calculated on tetrafluoroethylene, of a modifying perfluorinated monomer.

4. The process as claimed in any one of claims 1 to 3, characterized in that the starting material is a thermally pretreated tetrafluoroethylene polymer containing an inorganic filler.

5. Thermally pretreated, non-melt-processable tetrafluoroethylene polymer powder, modified by a perfluorinated monomer, containing tetrafluoroethylene units and 0.0002 to 0.5 mole% of units of a perfluorinated monomer, calculated on tetrafluoroethylene units, having a degree of sintering of substantially 100% determined by differential thermoanalysis, an average particle diameter $d_{50}$ of from 300 to 700 µm, a proportion of fine particles below 150 µm of at most 15% by weight, determined by dry sieve analyses, a bulk density above 770 g/l and a powder flow index of at most 3 s/50 g.

## Revendications

1. Procédé pour le traitement complémentaire de polymères du tétrafluoréthylène qui ne peuvent pas être travaillés à l'état fondu, qui ont été soumis à un pré-traitement thermique par chauffage à une température de 325 à 500 °C jusqu'à un degré de frittage de pratiquement 100%, déterminé par thermo-analyse différentielle, et qui, avant le traitement complémentaire, ont éventuellement été broyés mécaniquement, traitement entraînant une augmentation de la masse volumique apparente et une amélioration de l'aptitude au ruissellement, procédé caractérisé en ce que le polymère du tétrafluoréthylène pré-traité thermiquement est soumis, à une température inférieure à +80 °C, à une contrainte de choc qui est provoquée par des collisions presque exclusivement mutuelles des particules sous l'effet accélérateur d'un ou de plusieurs jets gazeux de grande vitesse.

2. Procédé selon la revendication 1, caractérisé en ce qu'on utilise, comme matière de départ, un polytétrafluoréthylène pré-traité thermiquement qui a été obtenu par le procédé de polymérisation en suspension.

3. Procédé selon la revendication 1, caractérisé en ce qu'on utilise, comme matière de départ, un polymère du tétrafluoréthylène pré-traité thermiquement, inapte à être travaillé à l'état fondu, qui a été obtenu par polymérisation en suspension en présence de 0,0004 à 1,5% en moles, par rapport au tétrafluoréthylène, d'un monomère perfluoré modificateur.

4. Procédé selon l'une quelconque des revendications 1 à 3, caractérisé en ce qu'on utilise, comme matière de départ, un polymère du tétrafluoréthylène pré-traité thermiquement, inapte à être travaillé à l'état fondu, qui contient une charge

minérale.

5. Poudre d'un polymère du tétrafluoréthylène modifié par un monomère perfluoré et contenant des motifs de tétrafluoréthylène et de 0,0002 à 0,5% en moles de motifs du monomère perfluoré par rapport aux motifs de tétrafluoréthylène, pré-traitée thermiquement et inapte à être travaillée à l'état fondu, poudre qui a un degré de frittage de pratiquement 100%, déterminé par la thermo-analyse différentielle, un diamètre moyen de particules $d_{50}$ de 300 à 700 μm, une proportion de particules fines, de taille inférieure à 150 μm, ne dépassant pas 15% en poids, déterminée par analyse aux tamis à sec, une masse volumique apparente supérieure à 770 g/litre et une aptitude au ruissellement d'au plus 3 s/50 g.